# EUROPEAN PATENT SPECIFICATION

(11) **EP 1 955 391 B1**
(45) Date of publication and mention of the grant of the patent: **12.10.2011**
(21) Application number: 06823706.4
(22) Date of filing: 27.11.2006
(51) Int. Cl.: H01M 2/34

(54) **SMALL BATTERY PACK EMPLOYING PCM ON SIDE SEALING PART**
KLEINES BATTERIEPACK, DAS PCM AUF EINEM SEITENABDICHTTEIL VERWENDET
PETIT BLOC-BATTERIE UTILISANT UN MODULE DE CIRCUITS DE PROTECTION SUR UNE PARTIE D'ETANCHEITE LATERALE

(30) Priority: 28.11.2005 KR 20050113915
(43) Date of publication of application: 13.08.2008
(73) Proprietor: LG Chem, Ltd., Youngdungpo-gu, Seoul 150-721 (KR)
(72) Inventor: LEE, Hyang Mok, Seoul 142-888 (KR); KIM, Jung-hwan, Seoul 137-949 (KR); KANG, Heegyoung, Chungcheongnam-do 330-797 (KR); HONG, Kichul, Seoul 150-771 (KR); HWANG, Sung-Min, Seoul 121-887 (KR); KIM, Tae il, Gyeonggi-do 423-063 (KR); BAEK, Ju-Hwan, Gyeonggi-do 431-726 (KR); WOO, Jung Kyu, Daegu 702-826 (KR); KANG, Kyong Won, Daejeon 301-782 (KR); PARK, Soo Min, Daejeon 305-756 (KR); KIM, Sanggon, Seoul 151-059 (KR)
(74) Representative: HOFFMANN EITLE
(86) International application number: PCT/KR2006/004998
(87) International publication number: WO 2007/061262

(56) References cited:
- DE-A1-102004 054 807
- JP-A- 2002 319 437
- US-A1- 2004 234 848
- US-A1- 2005 208 346
- US-B1- 6 492 058
- US-B2- 6 893 753

## Description

### Technical Field

The present invention relates to a slim small-sized battery pack including a protection circuit module (PCM) mounted at a side sealing part thereof. More particularly, the present invention relates to a battery pack constructed in a structure in which an electrode assembly is mounted in a receiving part of a pouch-shaped battery case made of a high-strength laminate sheet including a resin layer and a metal layer in a sealed state, side sealing parts having ends bent toward the receiving part such that side sealing parts of the battery case form curved outer circumferential surfaces, and a PCM is located in an inner space of at least one of the bent side sealing parts. The battery pack can be manufactured in a thinner and more compact structure without using additional pack sheathing members, such as a box-shaped case and a frame. The PCM is spaced apart from electrode terminals. Consequently, the battery pack exhibits high safety against external impacts, such as dropping of the battery pack.

### Background Art

As mobile devices have been increasingly developed, and the demand of such mobile devices has increased, the demand of secondary batteries has also sharply increased as an energy source for the mobile devices. Among them is a lithium secondary battery having high energy density and high discharge voltage, on which much research has been carried out and which is now commercially and widely used.

Based on the appearance thereof, the lithium secondary battery may be classified as a cylindrical battery, a prismatic battery, or a pouch-shaped battery. Based on the form of electrolyte, the lithium secondary battery may be also classified as a lithium-ion battery, a lithium-ion polymer battery, or a lithium polymer battery.

A recent trend toward the miniaturization of mobile devices has been increasing the demand of the prismatic battery or the pouch-shaped battery, which has small thickness. Especially, the pouch-shaped battery has attracted considerable attention because the form of the battery can be easily changed, the manufacturing costs of the battery are low, and the weight of the battery is small.

Generally, the pouch-shaped battery is a kind of battery constructed in a structure in which an electrode assembly and an electrolyte is included in a pouch-shaped case made of a laminate sheet comprising a resin layer and a metal layer in a sealed state. The electrode assembly mounted in the battery case may be a jelly-roll (winding) type electrode assembly or a stacking type electrode assembly.

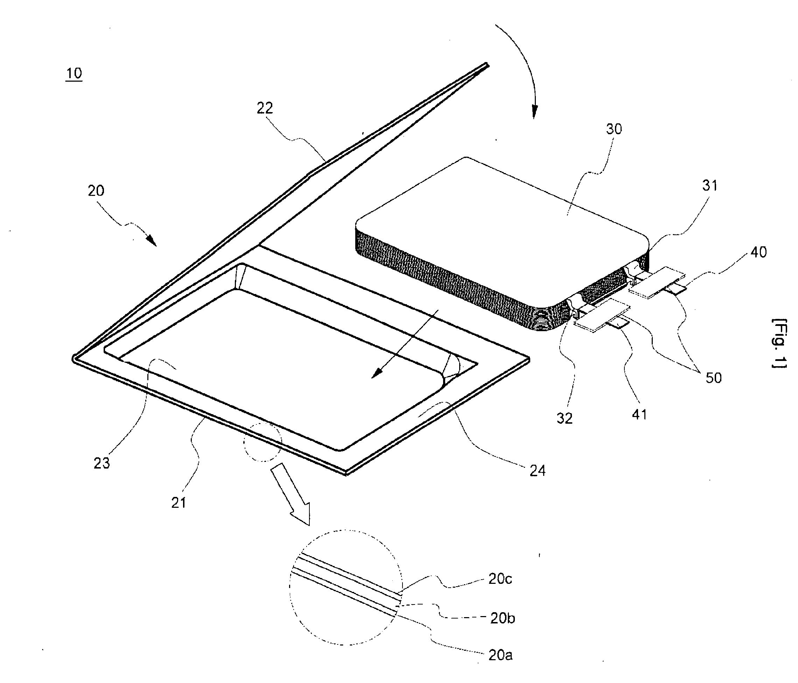

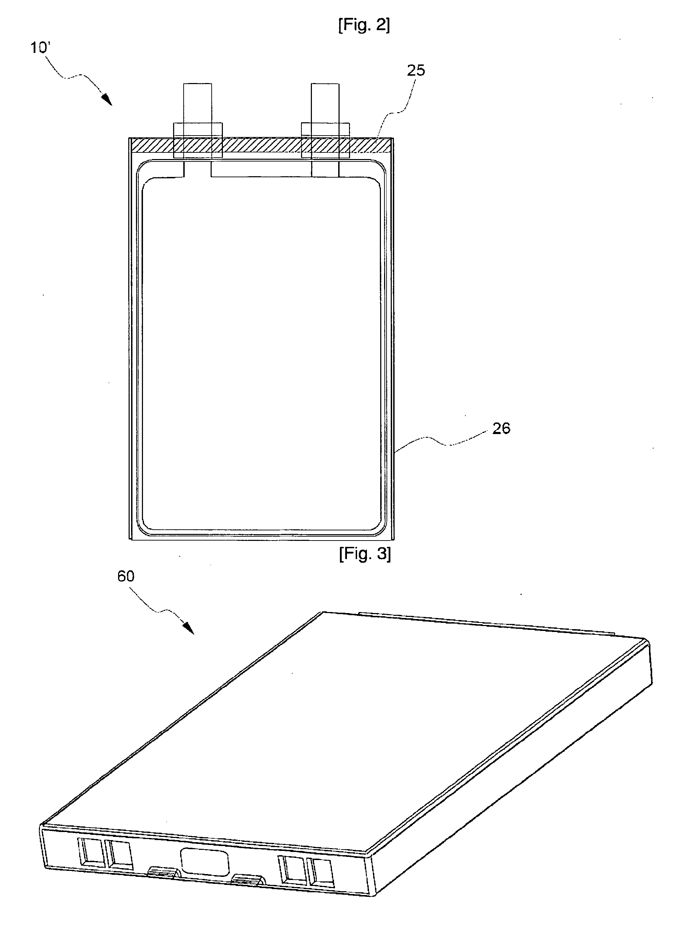

FIG. 1 is a view typically illustrating the structure of a conventional pouch-shaped secondary battery including a stacking type electrode assembly, and FIG. 2 is a see-through plan view of the battery of FIG. 1 typically illustrating the assembled state of the battery.

Referring first to FIG. 1, a pouch-shaped secondary battery 10 is constructed in a structure in which an electrode assembly 30 comprising cathodes, anodes, and separators, coated with solid electrolyte, disposed between the respective cathodes and anodes is mounted in a pouch-shaped battery case 20 in a sealed state, and cathode and anode taps 31 and 32 of the electrode assembly 30 are electrically connected with two electrode leads 40 and 41, which are exposed to the outside of the battery case 20.

The battery case 20 includes a case body 21 having a depressed receiving part 23 for receiving the electrode assembly 30 and a cover 22 integrally connected to the case body 21.

The case body 21 and the cover 22 include an outer coating layer 20a made of ONy (oriented nylon film), a barrier layer 20b made of ordinary aluminum metal, and an inner sealant layer 20c made of CPP (cast polypropylene). The inner sealant layer 20 c is coated with a hot melt layer (not shown) at the edge thereof, whereby the upper end of the case body 20 and the upper end of the cover 22 are securely attached to each other by heat and pressure generated from a heat welding machine (not shown).

The stacking type electrode assembly 30 is constructed such that the plurality of cathode taps 31 and the plurality of anode taps 32 are coupled to the electrode leads 40 and 41, respectively, by welding. Also, insulative films 50 are attached to the upper and lower surfaces of the respective electrode leads 40 and 41 so as to prevent the occurrence of short circuits between the heat welding machine and the electrode leads 40 and 41 and to secure the sealability between the electrode leads 40 and 41 and the battery case 20 when the upper end 24 of the case body 21 and the upper end of the cover 22 are thermally welded to each other by the heat welding machine.

When the contact regions of the case body 21 and cover 22 are thermally welded to each other, while the electrode assembly 30 impregnated with the electrolyte is located in the receiving part 23, as shown in FIG. 2, an upper sealing part 25 and a side sealing part 26 are formed. The side sealing part 26 unnecessarily extends in opposite directions, and therefore, the side sealing part 26 is bent vertically so as to manufacture a battery pack.

Since the pouch-shaped battery 10 is constructed in a structure in which the case body 21 and the cover 22 include the outer coating layer 20a made of ONy (oriented nylon film), the barrier layer 20b made of ordinary aluminum metal, and the inner sealant layer 20c made of CPP (cast polypropylene), as described above, the case body 21 and the cover 22 may be easily damaged, when physical impacts are applied to the pouch-shaped battery 10 or a pointed object presses the pouch-shaped battery 10, with the result that the pouch-shaped battery 10 may catch fire or explode.

For this reason, a battery cell 10' formed by vertically bending the side sealing part 26 is generally mounted in a case (not shown) having predetermined mechanical strength so as to constitute a battery pack.

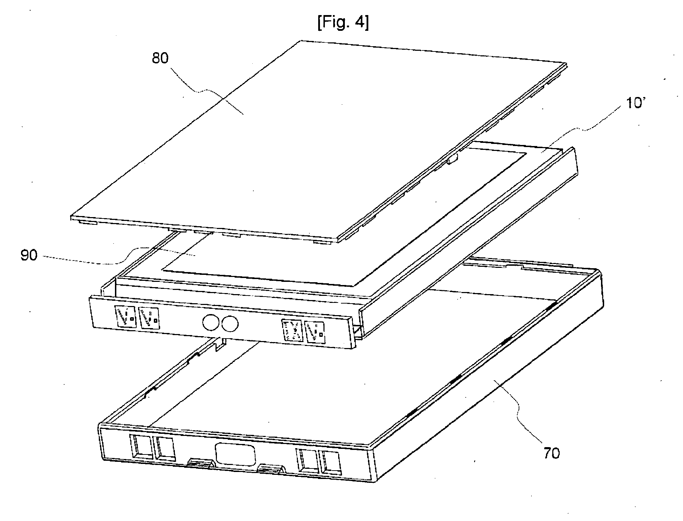

FIGS. 3 and 4 illustrate a representative structure of such a battery pack after and before the assembly of the battery pack, respectively.

Referring to these drawings, a battery pack 60 includes a battery cell 10', in which an electrode assembly having cathodes, anodes, and separators, and an electrolyte is included in a sealed state, a pack case body 70 having an inner space for receiving the battery cell 10', and an upper cover 80 coupled to the pack case body 70, in which the battery cell 10' is received, for sealing the battery cell 10'. Between the pack case body 70 and the battery cell 10' and between the upper cover 80 and the battery cell 10' is disposed a double-sided adhesive tape 90.

Generally, the battery pack 60 having the above-described structure is assembled by coupling the pack case body 70 and the upper cover 80, which are made of a plastic material, such as polycarbonate (PC) or acrylonitrile butadiene styrene (ABS), using an ultrasonic welding method. The ultrasonic welding method is a method of welding two surfaces to be attached using frictional heat generated by vibrations of high frequency, for example, 20,000 Hz.

As the demand of a battery pack having smaller thickness has increased, however, the recent thickness of the pack case body 70 and the upper cover 80 has been reduced to 0.3 to 0.35 mm. As a result, it is difficult to perform die casting and injection molding. Furthermore, the welding strength is decreased, and therefore, the welding defective ratio is increased.

A battery using a metal case (i.e., a prismatic battery) provides appropriate strength against external impacts even when the thickness of the metal case is very small due to the characteristics of the metal case. However, the pouch-shaped battery 10 having the structure illustrated in FIG. 1 provides small strength against external impacts due to the structural characteristics of the pouch-shaped battery. As a result, the application of a thin pack case is limited.

Furthermore, a protection circuit module (PCM) is mounted adjacent to the upper end of the battery cell 10', i.e., electrode terminals (not shown). Consequently, when external impacts are applied to the battery cell 10', for example, the battery cell 10' drops, a possibility of the occurrence of short circuits is high. For example, when the battery cell 10' drops with the electrode terminals down, the battery cell 10' leans forward, and therefore, the battery cell 10' is brought into contact with the PCM. At this time, the electrode terminals may be connected with a circuit of the PCM, whereby short circuits may occur. Consequently, when the safety of the battery pack is tested, a drop test is generally performed such that the battery pack drops forward so as to check the occurrence of short circuits. The possibility of the occurrence of short circuits is increased as the battery pack is constructed with a compact and slim structure.

Consequently, there is a high necessity of a battery pack that is easily manufactured, has appropriate strength against external impacts and high resistance to short circuits, and is constructed with a more compact and slim structure.

### Disclosure of Invention

### Technical Problem

Therefore, the present invention has been made to solve the above problems, and other technical problems that have yet to be resolved.

Specifically, it is an advantage obtainable with embodiments of the present invention to provide a battery pack that can be easily assembled through a simplified assembly process, whereby the manufacturing costs of the battery pack are reduced.

It is another advantage obtainable with embodiments of the present invention to provide a battery pack that has appropriate strength without using conventional pack sheathing members, such as a box-shaped case and a frame, whereby the battery pack is manufactured with a thin and compact structure

It is a further advantage obtainable with embodiments of the present invention to provide a battery pack that has high resistance to short circuits due to external impacts applied to the battery pack, such as dropping of the battery pack.

### Technical Solution

In accordance with the present invention, there is provided a battery pack as defined in Claim 1 below.

Consequently, embodiments of the battery pack according to the present invention may be constructed without using additional pack sheathing members, whereby the assembly process of the battery pack is simplified, the battery pack is manufactured in a thinner and more compact structure with the reduced manufacturing costs, and the battery pack exhibits high safety against external impacts. These characteristics of embodiments of the present invention are acquired by making the battery case of the high-strength laminate sheet, forming the side sealing parts of the battery case in a specific shape, and locating the PCM in the inner space of at least one of the bent side sealing parts.

In a preferred embodiment, the high-strength laminate sheet includes an outer coating layer made of polymer film, a barrier layer made of metal foil, and an inner sealant layer made of a polyolefin-based material, the metal foil of the barrier layer being aluminum alloy, the outer coating layer being made of polyethylene naphthalate (PEN) and/or a polyethylene terephthalate (PET) layer being coated at the outer surface of the outer coating layer, and the laminate sheet has resistance to a pointed piercing force of 6.5 kgf or more, the details of which are disclosed in Korean International Patent Application No. PCT/KR2005/3436, which has been filed in the name of the applicant of the present patent application. The disclosure of the above-mentioned patent application is hereby incorporated by reference as if fully set forth herein.

In the high-strength laminate sheet, the metal foil serves to prevent the introduction or the leakage of matter and, in addition, to increase the strength of the battery case. Consequently, the metal foil provides high strength together with the outer coating layer or the resin layer additionally applied to the outer surface of the outer coating layer.

The pointed piercing force means a piercing force measured according to an FTMS 101C method. The battery case made of the conventional laminate sheet has a pointed piercing force of approximately 5.0 kgf, whereas the battery case according to the present invention has a pointed piercing force of at least 6.5 kgf, preferably 6.5 to 10.9 kgf, more preferably 7.0 to 8.5 kgf. The above-specified range of the pointed piercing force may be a range to secure the safety of the battery against the damage to the battery due to various pointed members when using the battery.

The barrier layer, which contributes to the increase of the strength, has a thickness of 20 to 150 µm. When the thickness of the barrier layer is too small, it is difficult to expect the prevention of the matter from being introduced or leaking and the increase of the strength. When the thickness of the barrier layer is too large, on the other hand, the processing efficiency of the barrier layer is decreased, and the thickness of the laminate sheet is increased.

The aluminum alloy constituting the barrier layer has various different strengths depending upon components of the alloy. For example, the aluminum alloy may be, but is not limited to, alloy Nos. 8079, 1N30, 8021, 3003, 3004, 3005, 3104, and 3105. These alloys may be used individually or in a combination of two or more alloys. Preferably, alloy Nos. 8079, 1N30, 8021, and 3004 is used as the metal foil of the barrier layer.

Preferably, the polymer film of the outer coating layer has a thickness of 5 to 40 µm. When the thickness of the polymer film is too small, the polymer film cannot provide desired strength. When the thickness of the polymer film is too large, on the other hand, the thickness of the laminate sheet is increased. According to the present invention, the polymer film of the outer coating layer may be made of PEN or oriented nylon film.

When the PET layer is selectively applied to the outer surface of the outer coating layer, the PET layer preferably has a thickness of 5 to 30µm. When the thickness of the PET layer is too small, the increase of the strength due to the addition of the PET layer is not expected. When the thickness of the PET layer is too large, on the other hand, the thickness of the laminate sheet is increased.

Although the use of the PEN film as the outer coating layer and the addition of the PET layer to the outer surface of the outer coating layer are optional, the predetermined pointed piercing force must be obtained by the application of at least one of them. The simultaneous use of them further increases the strength of the laminate sheet.

Preferably, the inner sealant layer is made of cast polypropylene (CPP) and has a thickness of 20 to 150µm.

The laminate sheet having the above-described structure has very excellent strength, and therefore, the laminate sheet in itself provides physical properties required for the battery pack, i.e., high tensile strength, impact strength, and durability, without using additional pack sheathing members.

The laminate sheet may be manufactured in various manners. For example, various members, such as the films and metal foil, constituting the respective layers are sequentially stacked one on another, and are then adhered to each other. The adhesion may be accomplished by a dry lamination method or an extrusion lamination method. The dry lamination method is a method of interposing an adhesive between the neighboring members, drying the adhesive, and applying heat and pressure to the neighboring members together with the adhesive using a heating roll such that the neighboring members can be adhered to each other at temperature higher than the room temperature and predetermined pressure. On the other hand, the extrusion lamination method is a method of interposing an adhesive between the neighboring members, and applying pressure to the neighboring members together with the adhesive using a pressing roll such that the neighboring members can be adhered to each other at the room temperature and predetermined pressure.

The high-strength laminate sheet has a mechanical strength higher than the conventional laminate sheet. Consequently, when the laminate sheet is deformed into a specific shape as a result of the application of a predetermined mechanical force to the laminate sheet, the deformed shape of the laminate sheet is maintained although a force lower than the above-mentioned mechanical force is applied to the laminate sheet.

According to the present invention, therefore, the side sealing parts, which are not useless in the conventional pouch-shaped battery, are deformed such that side sealing parts form curved outer circumferential surfaces, whereby the side sealing parts function usefully.

The side sealing parts formed by thermally welding the two laminate sheets (the case body and the cover) are constructed in a thin plate-shaped structure. Consequently, the ends of the side sealing parts are relatively sharp. In the conventional battery pack, as shown in FIGS. 3 and 4, the side sealing parts are folded vertically and positioned inside the pack sheathing member (the case). According to the present invention, on the other hand, no additional pack sheathing members are used, and the side sealing parts constitute parts of the appearance of the battery pack when the battery pack is manufactured. Consequently, the ends of the side sealing parts are directed inward while the side sealing parts form the curved outer circumferential surfaces, whereby the side sealing parts are deformed such that the side sealing parts surround the outer surface of the battery case at the electrode assembly receiving part thereof. Furthermore, the side sealing parts deformed to form the curved outer circumferential surfaces form gentle outer surface (side surfaces), and therefore, when a sheathing film is applied to the outer surface of the battery case, the sheathing film is easily attached to the outer surface of the battery case. Also, the battery pack having such gentle side surfaces is easily mounted in a device.

The curved outer circumferential surfaces means structures in which the ends of the side sealing parts are bent toward the electrode assembly receiving part, i.e., inward, and the bent surfaces form gentle curves or corners that are not angled. Consequently, the curved outer circumferential surfaces may be formed in various structures. Preferably, the curved outer circumferential surfaces have an arc structure in vertical section.

The ends of the side sealing parts, which are gently bent inward, may be in direct contact with the outer surface of the battery case at the electrode assembly receiving part thereof. Alternatively, the ends of the side sealing parts may be slightly spaced apart from the outer surface of the battery case at the electrode assembly receiving part thereof.

According to the present invention, the PCM is mounted in the inner space of the corresponding side sealing part. The side sealing parts are also used as spaces for mounting the PCM, and therefore, the battery pack is manufactured in a more compact structure. The PCM is an element including a protection circuit for controlling overcharge, overdischarge, and overcurrent of the battery cell. Preferably, the PCM is constructed in the form of a printed circuit board (PCB). In a preferred embodiment, an insulation sheet is disposed between the outer surface of the battery case and the PCM, whereby the electrical insulation is further increased.

The PCM may be stably fixed in the inner space of the corresponding side sealing part without using an additional member. Preferably, the side sealing parts are formed such that the side sealing parts are brought into tight contact with the PCM while curved outer circumferential surfaces are formed along the outer surface of the PCM such that corners of the side sealing parts are not angular. For example, when the PCM has a rectangular shape in vertical section, the side sealing parts may be constructed in a structure in which the side sealing parts have a rectangular shape corresponding to that of the PCM, and the corners of the side sealing parts are bent so as to form a small arc.

According to circumstances, a bonding agent, a double-sided adhesive tape, or an insertion member may be used to stably fix the PCM in the inner space of the corresponding side sealing part.

The PCM may be mounted in the inner space of any one of the two side sealing parts, and, according to circumstances, may be mounted in the respective inner spaces of the two side sealing parts.

A connecting member may be used to accomplish the electrical connection between the PCM mounted in the inner space of the corresponding side sealing part and the electrode terminals located at the upper end of the battery cell. The connecting member is not particularly restricted so long as the electrical connection is accomplished by the connecting member. Preferably, the connecting member is a bus bar made of a nickel plate, which is bent in the same shape as the outer surface of the battery cell.

The upper end of the battery cell has no additional functions except that the upper end of the battery cell is a region where the electrode terminals are connected with the connecting member. Consequently, it is preferable to lower the height of the upper end of the battery cell as much as possible, and thus the total size of the battery cell. In a preferred embodiment, an upper end sealing part is vertically bent upward such that the upper end sealing part is brought into tight contact with the cell body of the battery cell, the electrode terminals are vertically bent downward such that the electrode terminals are brought into tight contact with the upper end sealing part, and the electrode terminals are connected to the connecting member. Insulation sheets may be disposed between the bent upper end sealing part and the electrode terminals so as to secure the sealability. Also, a top cap may be additionally mounted to the upper end of the battery cell so as to protect the upper end of the battery cell from the outside.

In a preferred embodiment, the top cap includes lower end extensions having sectional shapes corresponding to the inner spaces of the bent side sealing parts, whereby the coupling of the top cap to the battery cell is easily accomplished by inserting the lower end extensions into the inner spaces of the side sealing parts.

According to the present invention, it is necessary to gently bend the side sealing parts in the predetermined shape. Consequently, opposite upper end corners of the battery case, in which an upper end sealing part and the side sealing parts intersect, are cut off by a predetermined size so as to facilitate the bending of the upper end sealing part.

External input and output terminals of the battery may be located at the upper end or the lower end of the battery cell. Preferably, the external input and output terminals of the battery are located at the lower end of the battery cell. For example, the insulative cap (the bottom cap) provided with the external input and output terminals may be mounted to the lower end of the battery cell. When the bottom cap includes lower end extensions having sectional shapes corresponding to the inner spaces of the bent side sealing parts, the coupling of the bottom cap to the battery cell is easily accomplished by inserting the lower end extensions into the inner spaces of the side sealing parts. The electrical connection between the external input and output terminals and the PCM is also accomplished by a connecting member, such as a bus bar.

In a preferred embodiment, a sheathing film is applied to the outer surface of the battery cell while the top cap and the bottom cap are mounted to the upper end and the lower end of the battery cell, respectively. The sheathing film is attached to the outer surface of the battery cell in such a manner that the outer surface of the battery cell is surrounded by the sheathing film. The sheathing film serves to prevent the introduction of foreign matter into the gap between the ends of the side sealing parts and the battery case and to increase the coupling force between the top and bottom caps and the battery cell. Product name, manufacturer's name, the use of the product, and instructions may be printed on the outer surface of the sheathing film.

### Brief Description of the Drawings

The features and other advantages of embodiments of the present invention will be more clearly understood from the following detailed description taken in conjunction with the accompanying drawings, in which:

FIG. 1 is an exploded perspective view illustrating a conventional pouch-shaped battery;

FIG. 2 is an assembled perspective view of the pouch-shaped battery of FIG. 1;

FIG. 3 is a perspective view illustrating a conventional battery pack including a pouch-shaped battery;

FIG. 4 is an exploded perspective view of the battery pack of FIG. 3;

FIG. 5 is a typical view illustrating a pouch-shaped battery according to a preferred embodiment of the present invention;

FIG. 6 is a vertical sectional view taken along line A-A of FIG. 5;

FIG. 7 is a typical view illustrating a battery cell according to a preferred embodiment of the present invention;

FIG. 8 is an enlarged view, in vertical section, of a region D of FIG. 7;

FIGS. 9 and 10 are typical views illustrating battery cells according to other preferred embodiments of the present invention, respectively;

FIGS. 11 to 15 are views illustrating an exemplary process for manufacturing a battery pack using such a battery cell as shown in FIG. 6 according to a preferred embodiment of the present invention.

### Mode for the Invention

Now, preferred embodiments of the present invention will be described in detail with reference to the accompanying drawings. It should be noted, however, that the scope of the present invention is not limited by the illustrated embodiments.

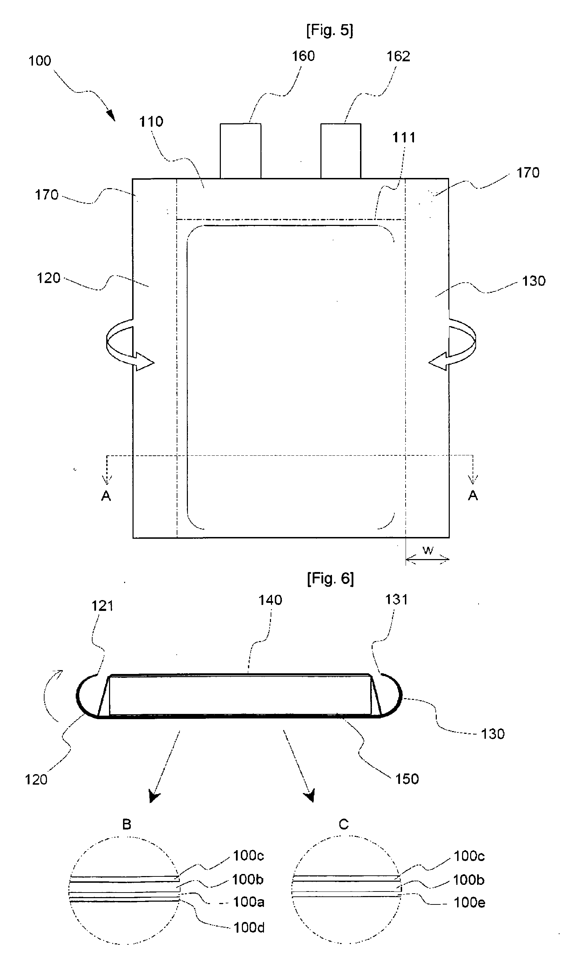

FIG. 5 is a typical view illustrating a pouch-shaped battery 100 according to a preferred embodiment of the present invention. The pouch-shaped battery of FIG. 5 is approximately identical to the conventional pouch-shaped battery 10 described with reference to FIGS. 1 and 2. Consequently, a description of the remainder of the pouch-shaped battery excluding the characteristic parts of the present invention will not be given.

When the upper end and opposite sides of the pouch-shaped battery 100 are thermally welded, while an electrode assembly is mounted in a battery case, sealing parts 110, 120, and 130 are formed at the upper end and the opposite sides of the pouch-shaped battery 100. According to the present invention, the ends of the side sealing parts 120 and 130 are gently bent toward an electrode assembly receiving part 140. FIG. 6 is a vertical sectional view taken along line A-A of FIG. 5 illustrating the bent ends of the side sealing parts.

Referring to FIG. 6, the battery case is constructed with two stacking structures. The first stacking structure (B) includes an outer coating layer 100a made of ONy, a barrier layer 100b made of aluminum alloy, an inner sealant layer 100c made of CPP, an outermost layer 100d made of polyethylene terephthalate (PET), which is coated at the outer surface of the outer coating layer 100a. The second stacking structure (C) includes an outer coating layer 100e made of polyethylene naphthalate (PEN), a barrier layer 100b made of aluminum alloy, and an inner sealant layer 100c made of CPP. When thermal welding is performed, the inner sealant layers 100c of the case body and the cover are welded to each other so as to constitute the sealing parts.

The ends of the side sealing parts 120 and 130 are bent toward the receiving part 140, in which the electrode assembly 150 is mounted, while the side sealing parts 120 and 130 form arc-shaped outer circumferential surfaces in vertical section. Consequently, the sharp ends 121 and 131 of the side sealing parts 120 and 130 are not directed to the outside, and therefore, an operator or a user is not injured by the sharp ends while the battery is handled.

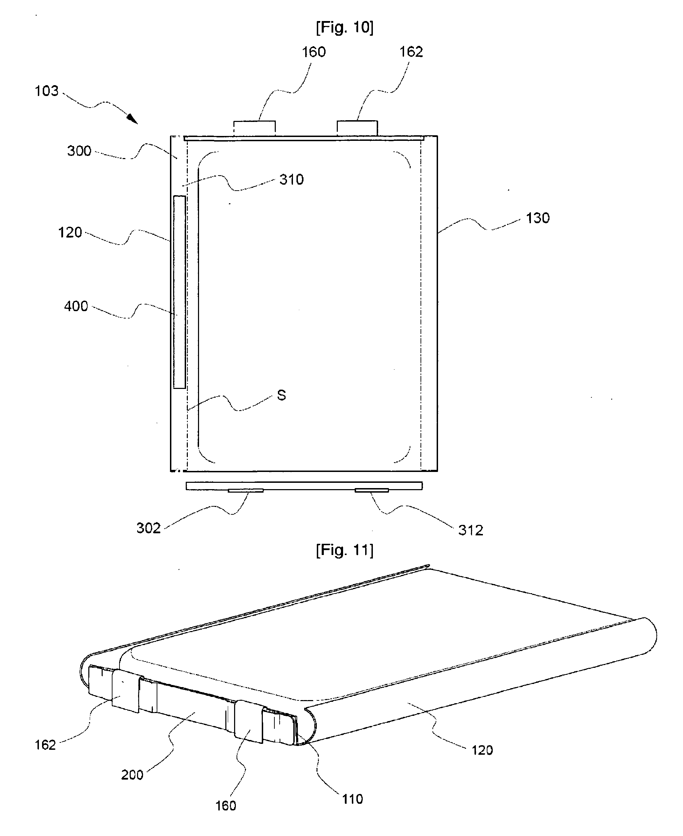

Referring back to FIG. 5, the upper end sealing part 110 is bent so as to reduce the height of a battery cell 100, which will be described below with reference to FIGS. 11 to 15. To facilitate the bending of the upper end sealing part 110, intersection parts 170 of the upper end sealing part 110 and the side sealing parts 120 and 130 are cut off by a predetermined size. The size of the cut-off intersection parts 170 may be decided within a range in which the sealability of the electrode assembly is not impaired.

Before or after the side sealing parts 120 and 130 are bent as indicated by arrows, the upper end sealing part 110 is bent vertically along a dashed dotted line.

According to the present invention, the side sealing parts 120 and 130 are bent, for example, as shown in FIG. 6. Consequently, it may be preferable to form the width w of the side sealing parts 120 and 130 such that the width of the side sealing parts 120 and 130 is greater than that of the side sealing parts of the conventional pouch-shaped battery.

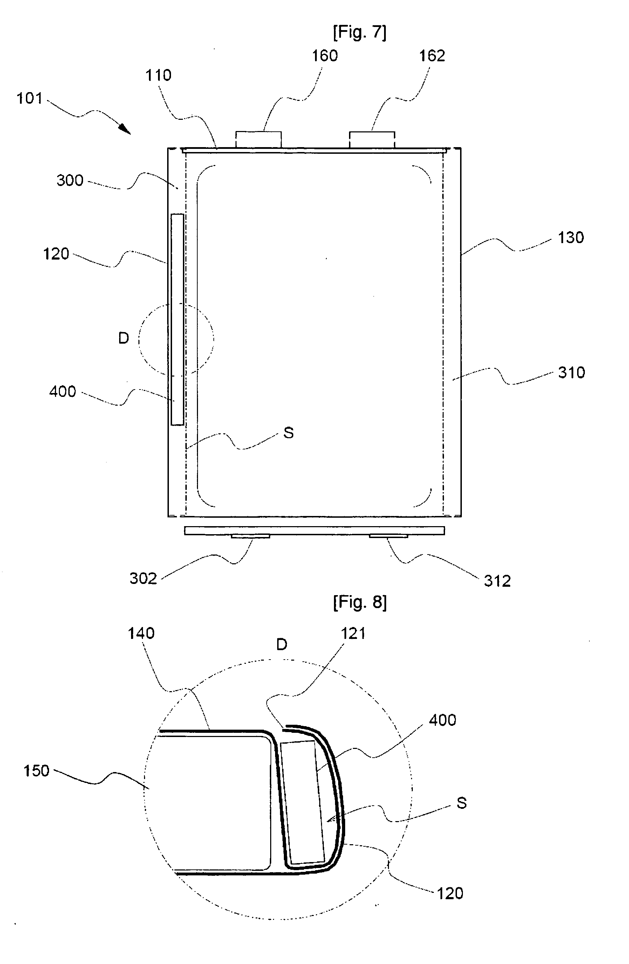

FIG. 7 is a typical view illustrating a battery cell according to a preferred embodiment of the present invention.

Referring to FIG. 7, a battery cell 101 is constructed in a structure in which an upper end sealing part 110 is vertically bent upward, and electrode leads 160 and 162 are vertically bent downward and are brought into tight contact with the upper end of the battery cell 101. Also, side sealing parts 120 and 130 are bent inward such that curved outer circumferential surfaces are formed at the outsides thereof. As a result, inner spaces S are formed, and a protection circuit module (PCM) 400 is mounted in one of the inner spaces S.

FIG. 8 is an enlarged view, in vertical section, of a region D of FIG. 7. Referring to FIG. 8, the PCM 400, which is constructed in the form of a printed circuit board (PCB), is mounted in the inner space S of the side sealing part 120, the end 121 of which is gently bent toward the receiving part 140 of the battery case, in which the electrode assembly 150 is mounted. Especially, the vertical-sectional shape of the side sealing part 120 approximately corresponds to the vertical-sectional shape, i.e., the rectangular shape, of the PCM 400, and the corners of the side sealing part 120 are rounded. Consequently, the PCM 400 is stably mounted in the inner space S of the side sealing part 120, which has a gently curved outer surface. The coupling between the PCM 400 and a bus bar 300 may be accomplished by various methods, such as spot welding, laser welding, and soldering.

Referring back to FIG. 7, external input and output terminals 302 and 312 are located at the lower end of the battery cell 101. The electrode terminals 160 and 162, the PCM 400, and the external input and output terminals 302 and 312 are electrically connected with each other via bus bars 400 and 310, which are bent to approximately correspond to the outer surface of the battery cell 101.

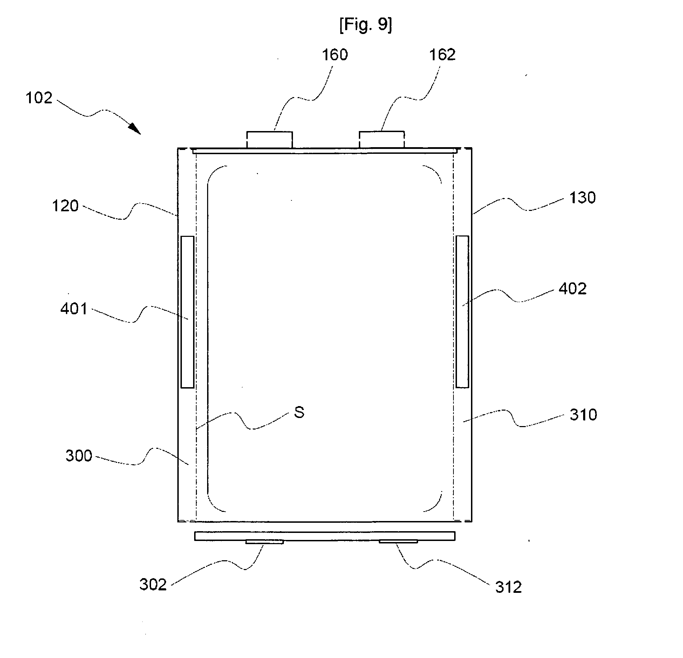

FIGS. 9 and 10 are typical views illustrating battery cells according to other preferred embodiments of the present invention, respectively.

Referring first to FIG. 9, a battery cell 102 is constructed in a structure in which two PCMs 401 and 402 are mounted at side sealing parts 120 and 130. The respective PCMs 40a and 402 are connected to electrode leads 160 and 162 at the upper end of the battery cell 102 and external input and output terminals 302 and 312 at the lower end of the battery cell 102, respectively.

A battery cell 103 of FIG. 10 is different from the battery cell 101 of FIG. 7 in that a PCM 400 is mounted at a side sealing part 120, and both bus bars 300 and 310 for electrically connecting electrode leads 160 and 162 at the upper end of the battery cell 103 and external input and output terminals 302 and 312 at the lower end of the battery cell 103 are located at the same side sealing part 120.

As apparent from the above description, the battery cell according to the present invention may have various structures, and therefore, it should be interpreted that the structures shown in FIGS. 7, 9 and 10, and other possible modifications are included in the scope of the present invention.

FIGS. 11 to 15 are views illustrating an exemplary process for manufacturing a battery pack using a secondary battery as such shown in FIG. 6 according to a preferred embodiment of the present invention.

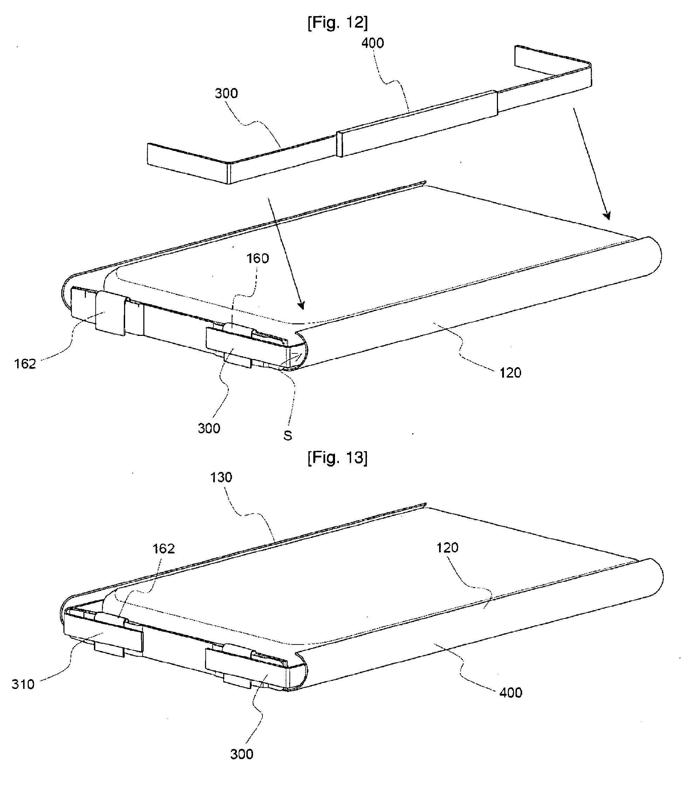

Referring first to FIG. 11, an upper end sealing part 110 is vertically bent upward, and an insulation sheet 200 is mounted to the bent upper end sealing part 110. Subsequently, a cathode lead 160 and an anode lead 162 are vertically bent downward such that the cathode lead 160 and the anode lead 162 are mounted to the insulation sheet 200. Due to the insulation sheet 200, the electrical insulation between the electrode leads 160 and 162 and a battery case body is stably maintained. A side sealing part 120 may be bent after a bus bar of FIG. 12 is mounted to the side sealing part 120 at a subsequent step. Alternatively, the side sealing part 120 may be bent before the bus bar is mounted to the side sealing part 120.

Referring to FIGS. 12 and 13, bus bars 300 and 310 are coupled to the cathode lead 160 and the anode lead 162, respectively, while the bus bars 300 and 310 are mounted in inner spaces S of side sealing parts 120 and 130. Preferably, the coupling between the electrode leads 160 and 162 and the corresponding bus bars 300 and 310 is accomplished by spot welding.

To the bus bar 300, which is mounted in the inner space S of the side sealing part 120, is connected a PCM 400. Specifically, the bus bar 300, to which the PCM 400 is connected, is connected to the electrode lead 160, and then the side sealing part 120 is bent. As a result, the PCM 400 is mounted in the inner space S of the side sealing part 120, as shown in the drawing.

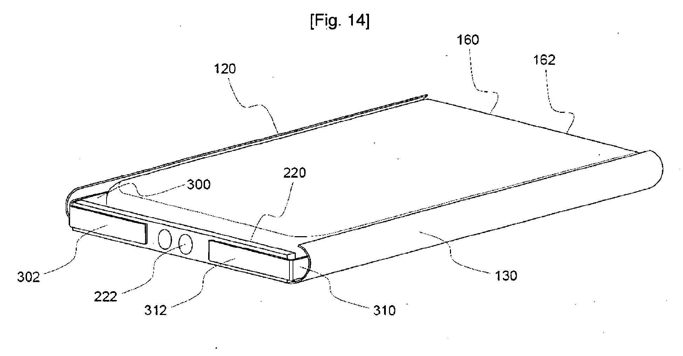

Referring to FIG. 14, a rectangular insulation member 220 is mounted to the lower end of the battery cell 101, which is opposite to the electrode terminals 160 and 162. Subsequently, bent ends 302 and 312 of the bus bars 300 and 310 are mounted to the insulation member 220. The insulation member 220 serves to electrically insulate the bus bars 300 and 310 from the cell body of the battery cell 101 and to support the bent ends 302 and 312 of the bus bars 300 and 310 such that the bent ends 302 and 312 are stably positioned at the lower end of the battery cell 101. Furthermore, test points for checking submergence of the battery cell 101 are also included. The bent ends 302 and 312 of the bus bars 300 and 310 in themselves serve as external input and output terminals.

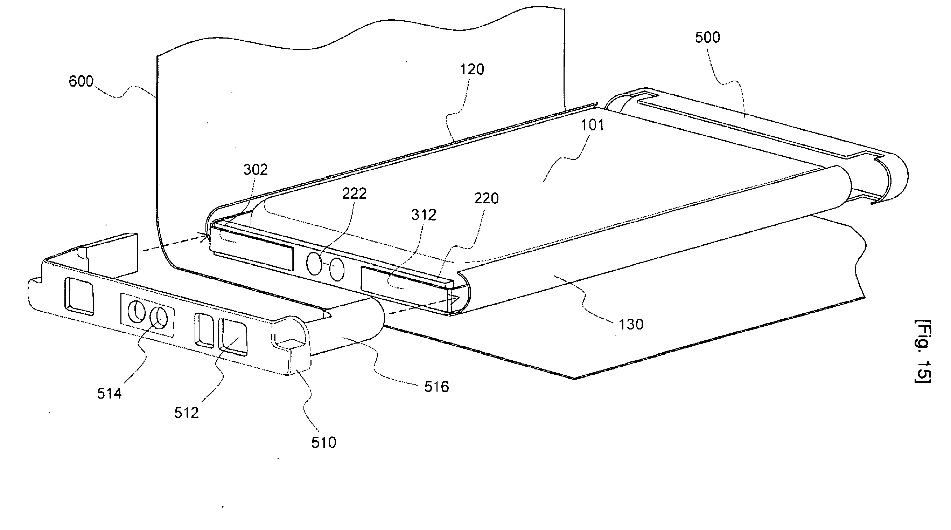

Referring to FIG. 15, a top cap 500 and a bottom cap 510 are mounted to the upper end and the lower end of the battery cell 101 for protecting electrical connection parts and preventing the introduction of foreign matter, and then a sheathing film 600 is applied to the outer surface of the battery cell 101.

The bottom cap 510, which is made of an insulative material, surrounds the lower end of the battery cell 101. The bottom cap 510 is provided at predetermined positions thereof with a plurality of openings 512 and 514, through which the bent ends 302 and 312 of the bus bars 300 and 310, i.e., the external input and output terminals, and the test points 222 are exposed to the outside. A lower end extension 516 extends toward the battery cell 101 such that the lower end extension 516 can be inserted into the inner space of the bent side sealing part 130 of the battery cell 101. Consequently, the coupling of the bottom cap 510 to the battery cell 101 is accomplished by inserting the lower end extension 516 into the inner space of the side sealing part 130.

According to circumstances, the gap around the insulation member 220 may be filled with an insulative resin, or an insulative cover is mounted in the gap around the insulation member 220, so as to prevent the occurrence of internal short circuits when the battery pack drops, the details of which are disclosed in Korean Patent Application No. 2005-5623, which has been filed in the name of the applicant of the present patent application. The disclosure of the above-mentioned patent application is hereby incorporated by reference as if fully set forth herein.

The top cap 500 may be also provided with a lower end extension 516 identical to that of the bottom cap 510 such that the lower end extension 516 of the top cap 500 can be inserted into the inner space of the side sealing part 130. However, the top cap 500 having a structure corresponding to the sectional shape of the battery cell 101 is shown in the drawings for the purpose of illustrating various coupling structures.

While the top cap 500 and the bottom cap 510 are mounted to the battery cell 101, the sheathing film 600 is applied to the battery cell 101. The sheathing film 600 serves to prevent the introduction of foreign matter into several gaps existing in the battery cell 101, for example, gaps defined between the ends of the side sealing parts 120 and 130 and the battery case, protecting the battery case, and increasing the coupling force of the top cap 500 and the bottom cap 510 to the battery cell 101.

Through the above-described assembly process, a small-sized battery pack having a compact and slim structure is completed.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### Industrial Applicability

As apparent from the above description, embodiments of the battery pack according to the present invention are constructed such that the battery case, in which the electrode assembly is mounted, is made of a laminate sheet having high strength, the side sealing parts of the battery case are formed in a specific shape, and the PCM is located in the inner space of the side sealing part. As a result, the side sealing parts in themselves are used as a structure to decide the external shape of the battery pack, and, at the same time, are used as spaces for mounting the PCM therein. Consequently, it is possible to construct the battery pack without using additional pack sheathing members, to simplify the assembly process of the battery pack, and to manufacture the battery pack in a thinner and more compact structure with the reduction in manufacturing costs. Furthermore, the PCM is located at either side of the battery cell while the PCM is spaced apart from the electrode terminals. Consequently, such embodiments of the battery pack have high safety against external impacts, such as dropping of the battery pack.

Embodiments of battery pack are more preferably used in a compact and slim battery pack, the demand of which has greatly increased recently.

## Claims

1. A battery pack (100) constructed in a structure in which an electrode assembly is mounted in a receiving part of a pouch-shaped battery case made of a high-strength laminate sheet including a resin layer and a metal layer in a sealed state, side sealing parts (120, 130) are provided being bent toward the receiving part such that side sealing parts of the battery case form curved outer circumferential surfaces which define inner spaces (S), and a protection circuit module (400) (PCM) is located in an inner space of one of the curved outer circumferential surfaces of the bent side sealing parts.

2. The battery pack according to claim 1, wherein the laminate sheet includes an outer coating layer (100d) made of polymer film, a barrier layer (100b) made of metal foil, and an inner sealant layer (100c) made of a polyolefin-based material, the metal foil of the barrier layer being aluminum alloy, the outer coating layer being made of polyethylene naphthalate (PEN) and/or a polyethylene terephthalate (PET) layer being coated at the outer surface of the outer coating layer, and the laminate sheet has resistance to a pointed piercing force of 6.5 kgf or more.

3. The battery pack according to claim 2, wherein the barrier layer has a thickness of 20 to 150 µm.

4. The battery pack according to claim 2, wherein the aluminum alloy is one or more selected from a group consisting of alloy Nos. 8079, 1N30, 8021, 3003, 3004, 3005, 3104, and 3105.

5. The battery pack according to claim 2, wherein the outer coating layer has a thickness of 5 to 40 µm.

6. The battery pack according to claim 2, wherein the polymer film of the outer coating layer is made of PEN or oriented nylon film.

7. The battery pack according to claim 1, wherein the curved outer circumferential surfaces have an arc structure in vertical section.

8. The battery pack according to claim 1, wherein an insulation sheet is disposed between the outer surface of the battery case and the PCM.

9. The battery pack according to claim 1, wherein the side sealing parts are formed such that the side sealing parts are brought into tight contact with the PCM while curved outer circumferential surfaces are formed along the outer surface of the PCM such that corners of the side sealing parts are not angular.

10. The battery pack according to claim 1, wherein a bonding agent, a double-sided adhesive tape, or an insertion member is used to stably fix the PCM in the inner space of the side sealing part.

11. The battery pack according to claim 1, wherein the PCM and electrode terminals (160, 162) located at the upper end of the battery cell are electrically connected with each other via a bus bar (300) made of a nickel plate, which is bent in the same shape as the outer surface of the battery cell.

12. The battery pack according to claim 1, wherein an upper end sealing part is vertically bent upward such that the upper end sealing part is brought into tight contact with the cell body of the battery cell, electrode terminals are vertically bent downward such that the electrode terminals are brought into tight contact with the upper end sealing part, and the electrode terminals are electrically connected to the PCM.

13. The battery pack according to claim 1, wherein an insulative top cap is mounted to the upper end of the battery cell.

14. The battery pack according to claim 1, wherein opposite upper end corners of the battery case, in which an upper end sealing part and the side sealing parts intersect, are cut off by a predetermined size so as to facilitate the bending of the upper end sealing part.

15. The battery pack according to claim 1, wherein external input and output terminals (302, 312) of the battery are located at the lower end of the battery cell.

16. The battery pack according to claim 15, wherein the external input and output terminals are bus bars (400, 310) extending from the inner spaces of the side sealing parts and bent at the lower end of the battery cell.

17. The battery pack according to claim 1, wherein an insulation member is mounted to the lower end of the battery cell for insulating the battery case and locating external input and output terminals (302, 312).

18. The battery pack according to claim 1, wherein an insulative cap (a bottom cap) is mounted at the lower end of the battery cell, the insulative cap having openings, through which external input and output terminals are exposed.

19. The battery pack according to claim 13 or 18, wherein the top cap and/or the bottom cap includes lower end extensions having sectional shapes corresponding to the inner spaces of the bent side sealing parts, whereby the coupling of the top cap and/or the bottom cap to the battery cell is accomplished by inserting the lower end extensions into the inner spaces of the side sealing parts.

20. The battery pack according to claim 13 or 18, wherein a sheathing film is applied to the outer surface of the battery cell while the cap is mounted to the upper end and/or the lower end of the battery cell.

## Patentansprüche

1. Batteriepack (100), das in einer Struktur konstruiert ist, in der eine Elektrodenanordnung in einem Aufnahmeteil eines beutelförmigen Batteriegehäuses montiert ist, das aus einer hochfesten Laminatplatte gemacht ist, die eine Kunststoffschicht und eine Metallschicht in einem abgedichteten Zustand aufweist, wobei Seitenabdichtteile (120, 130) vorgesehen sind, die derart in Richtung des Aufnahmeteils gebogen sind, dass Seitenabdichtteile des Batteriegehäuses gekrümmte äußere Umfangsoberflächen bilden, die Innenräume (S) definieren, und ein Schutzschaltungsmodul (400) (PCM) in einem Innenraum einer der gekrümmten äußeren Umfangsoberflächen der gebogenen Seitenabdichtteile angeordnet ist.

2. Batteriepack nach Anspruch 1, wobei die Laminatplatte eine äußere Abdeckschicht (100d) aufweist, die aus einem Polymerfilm gemacht ist, eine Barriereschicht (100b), die aus einer Metallfolie gemacht ist, und eine innere Abdichtschicht (100c), die aus einem Polyolefin-basierten Material gemacht ist, wobei die Metallfolie der Barriereschicht eine Aluminiumlegierung ist, wobei die äußere Abdeckschicht aus einer Polyethylennaphthalat(PEN)-oder einer Polyethylenterephthalat(PET)-Schicht gemacht ist, die an der äußeren Oberfläche der äußeren Abdeckschicht aufgetragen ist, und die Laminatplatte eine Widerstandskraft gegenüber einer Punktstechkraft von 6,5 kfg oder mehr hat.

3. Batteriepack nach Anspruch 2, wobei die Barriereschicht eine Dicke von 20 bis 150 µm hat.

4. Batteriepack nach Anspruch 2, wobei die Aluminiumlegierung eine oder mehrere ausgewählt aus einer Gruppe ist, die aus den Legierungen Nummern 8079, 1N30, 8021, 3003, 3004, 3005, 3104 und 3105 besteht.

5. Batteriepack nach Anspruch 2, wobei die äußere Abdeckschicht eine Dicke von 5 bis 40 µm hat.

6. Batteriepack nach Anspruch 2, wobei der Polymerfilm der äußeren Abdeckschicht aus PEN oder ausgerichtetem Nylonfilm gemacht ist.

7. Batteriepack nach Anspruch 1, wobei die gekrümmten äußeren Umfangsoberflächen eine Bogenstruktur im Vertikalschnitt haben.

8. Batteriepack nach Anspruch 1, wobei die Isolationsplatte zwischen der äußeren Oberfläche des Batteriegehäuses und dem PCM angeordnet ist.

9. Batteriepack nach Anspruch 1, wobei die Seitenabdichtteile derart ausgebildet sind, dass die Seitenabdichtteile in dichten Kontakt mit dem PCM gebracht werden, während gekrümmte äußere Umfangsoberflächen entlang der äußeren Oberfläche des PCM derart ausgebildet sind, dass Ecken der Seitenabdichtteile nicht winkelig sind.

10. Batteriepack nach Anspruch 1, wobei ein Bindemittel, ein doppelseitiges Klebeband oder ein Einsetzelement verwendet wird, um das PCM in dem Innenraum des Seitenabdichtteils stabil zu befestigen.

11. Batteriepack nach Anspruch 1, wobei das PCM und die Elektrodenanschlüsse (160, 162), die am oberen Ende der Batteriezelle angeordnet sind, elektrisch über eine Busschiene (300) miteinander verbunden sind, die aus einer Nickelplatte gemacht ist, die in dieselbe Form wie die äußere Oberfläche der Batteriezelle gebogen ist.

12. Batteriepack nach Anspruch 1, wobei ein oberer Endabdichtteil derart vertikal nach oben gebogen ist, dass der obere Endabdichtteil in dichten Kontakt mit dem Zellkörper der Batteriezelle gebracht wird, wobei Elektrodenanschlüsse derart vertikal nach unten gebogen sind, dass die Elektrodenanschlüsse in dichten Kontakt mit dem oberen Endabdichtteil gebracht werden, und die Elektrodenanschlüsse elektrisch mit dem PCM verbunden sind.

13. Batteriepack nach Anspruch 1, wobei eine isolierende Oberkappe an dem oberen Ende der Batteriezelle angebracht ist.

14. Batteriepack nach Anspruch 1, wobei einander gegenüberliegende obere Endecken des Batteriegehäuses, in denen ein oberer Endabdichtteil und die Seitenabdichtteile aufeinander treffen, um eine vorbestimmte Größe abgeschnitten sind, um das Biegen des oberen Endabdichtteils zu vereinfachen.

15. Batteriepack nach Anspruch 1, wobei äußere Eingabe- und Ausgabeanschlüsse (302, 312) der Batterie an dem unteren Ende der Batteriezelle angeordnet sind.

16. Batteriepack nach Anspruch 15, wobei der äußere Eingabe-und Ausgabeanschluss Busschienen (400, 310) sind, die sich von den Innenräumen der Seitenabdichtteile erstrecken und am unteren Ende der Batteriezelle gebogen sind.

17. Batteriepack nach Anspruch 1, wobei ein Isolationselement an dem unteren Ende der Batteriezelle zum Isolieren des Batteriegehäuses und Anordnen von äußeren Eingabe- und Ausgabeanschlüssen (302, 312) angebracht ist.

18. Batteriepack nach Anspruch 1, wobei eine isolierende Kappe (eine Bodenkappe) an dem unteren Ende der Batteriezelle angebracht ist, wobei die isolierende Kappe Öffnungen aufweist, durch die äußere Eingabe- und Ausgabeanschlüsse freigelegt sind.

19. Batteriepack nach Anspruch 13 oder 18, wobei die Oberkappe und/oder die Bodenkappe untere Endverlängerungen aufweist, die Schnittformen haben, die den Innenräumen der gebogenen Seitenabdichtteile entsprechen, wobei die Kopplung der Oberkappe und/oder der Bodenkappe mit der Batteriezelle durch Einsetzen der unteren Endverlängerungen in die Innenräume der Seitenabdichtteile erfüllt wird.

20. Batteriepack nach Anspruch 13 oder 18, wobei eine Hüllenfolie an der äußeren Oberfläche der Batteriezelle angebracht wird, während die Kappe an dem oberen Ende und/oder dem unteren Ende der Batteriezelle angebracht wird.

## Revendications

1. Bloc de batterie (100) construit en une structure dans laquelle un ensemble d'électrodes est monté dans une partie de réception d'un boîtier de batterie en forme de poche réalisé en une feuille de stratifié à haute résistance comportant une couche de résine et une couche métallique dans un état étanche, des parties d'étanchéité (120, 130) latérales sont prévues fléchies vers la partie de réception de sorte que les parties d'étanchéité latérales du boîtier de batterie forment des surfaces circonférentielles extérieures courbées qui définissent des espaces intérieurs (S), et un module de circuit de protection (400) (dit module PCM) est situé dans un espace intérieur de l'une des surfaces circonférentielles extérieures courbées des parties d'étanchéité latérales fléchies.

2. Bloc de batterie selon la revendication 1, dans lequel la feuille de stratifié comprend une couche de revêtement extérieure (100d) réalisée en un film polymère, une couche barrière (100b) réalisée en une feuille de métal, et une couche d'étanchéité intérieure (100c) réalisée en un matériau à base de polyoléfine, la feuille de métal de la couche barrière étant en alliage d'aluminium, la couche de revêtement extérieure étant réalisée en polyéthylène naphthalate (PEN) et/ou une couche de polyéthylène téréphtalate (PET) étant revêtue à la surface extérieure de la couche de revêtement extérieure, et la feuille de stratifié a une résistance à une force de perçage pointue de 6,5 kgf ou plus.

3. Bloc de batterie selon la revendication 2, dans lequel la couche barrière a une épaisseur allant de 20 à 150 µm.

4. Bloc de batterie selon la revendication 2, dans lequel l'alliage d'aluminium est un alliage d'aluminium ou plus sélectionné parmi un groupe composé d'un alliage n° 8079, 1N30, 8021, 3003, 3004, 3005, 3104 et 3105.

5. Bloc de batterie selon la revendication 2, dans lequel la couche de revêtement extérieure a une épaisseur allant de 5 à 40 µm.

6. Bloc de batterie selon la revendication 2, dans lequel le film de polymère de la couche de revêtement extérieure est réalisé en PEN ou en film de nylon orienté.

7. Bloc de batterie selon la revendication 1, dans lequel les surfaces circonférentielles extérieures courbées ont une structure d'arc en section verticale.

8. Bloc de batterie selon la revendication 1, dans lequel une feuille isolante est disposée entre la surface extérieure du boîtier de batterie et le PCM.

9. Bloc de batterie selon la revendication 1, dans lequel les parties d'étanchéité latérales sont formées de telle sorte que les parties d'étanchéité latérales soient étroitement en contact avec le PCM tandis que les surfaces circonférentielles extérieures courbées sont formées le long de la surface extérieure du PCM de telle sorte que les coins des parties d'étanchéité latérale ne soient pas angulaires.

10. Bloc de batterie selon la revendication 1, dans lequel un liant, une bande adhésive à double-face, ou un élément d'insertion est utilisé pour fixer le PCM de manière stable dans l'espace intérieur de la partie d'étanchéité latérale.

11. Bloc de batterie selon la revendication 1, dans lequel le PCM et les bornes d'électrode (160, 162) situés à l'extrémité supérieure de l'élément de batterie sont reliés électriquement entre eux à travers une barre omnibus (300) réalisée en une plaque de nickel, qui est fléchie dans la même forme que la surface extérieure de l'élément de batterie.

12. Bloc de batterie selon la revendication 1, dans lequel une partie d'étanchéité d'extrémité supérieure est fléchie de manière verticalement ascendante de sorte que la partie d'étanchéité d'extrémité supérieure soit étroitement en contact avec le corps de l'élément dans l'élément de batterie, des bornes d'électrodes sont verticalement fléchies vers le bas de telle sorte que les bornes d'électrodes soient étroitement en contact avec la partie d'étanchéité d'extrémité supérieure, et les bornes d'électrodes sont reliées électriquement au PCM.

13. Bloc de batterie selon la revendication 1, dans lequel un capot supérieur isolant est monté à l'extrémité supérieure de l'élément de batterie.

14. Bloc de batterie selon la revendication 1, dans lequel des coins d'extrémité supérieure du boîtier de batterie, dans lequel une partie d'étanchéité d'extrémité supérieure et les parties d'étanchéité latérales se croisent, sont coupés à une taille prédéterminée de sorte à faciliter le pliage de la partie d'étanchéité d'extrémité supérieure.

15. Bloc de batterie selon la revendication 1, dans lequel les bornes (302, 312) d'entrée et de sortie externes de la batterie sont situées à l'extrémité inférieure de l'élément de batterie.

16. Bloc de batterie selon la revendication 15, dans lequel les bornes d'entrée et de sortie externes sont des barres omnibus (400, 310) s'étendant des espaces internes des parties d'étanchéité latérale et fléchies à l'extrémité inférieure de l'élément de batterie.

17. Bloc de batterie selon la revendication 1, dans lequel un élément d'isolation est monté à l'extrémité inférieure de l'élément de batterie pour isoler le boîtier de batterie et pour localiser des bornes (302, 312) d'entrée et de sortie externes.

18. Bloc de batterie selon la revendication 1, dans lequel un capot isolant (un capot inférieur) est monté à l'extrémité inférieure de l'élément de batterie, le capot isolant ayant des ouvertures, à travers lesquelles des bornes d'entrée et de sortie externes sont exposées.

19. Bloc de batterie, selon, la revendication 13 ou 18, dans lequel le capot supérieur et/ou le capot inferieur comportent des extensions d'extrémité inférieure ayant des formes en coupe qui correspondent aux espaces intérieurs des parties d'étanchéité latérales fléchies, grâce à quoi l'accouplement du capot supérieur et/ou du capot inferieur à l'élément de batterie est accompli en insérant les extensions d'extrémité inférieure dans les espaces intérieurs des parties d'étanchéité latérales.

20. Bloc de batterie selon les revendications 13 ou 18, dans lequel un film de revêtement est appliqué à la surface extérieure de l'élément de batterie tandis que le capot est monté à l'extrémité supérieure et/ou l'extrémité inférieure de l'élément de batterie.
